# EUROPEAN PATENT APPLICATION

(11) **EP 4 772 728 A1**
(43) Date of publication of application: **08.07.2026**
(21) Application number: 25150299.3
(22) Date of filing: 06.01.2025
(51) Int. Cl.: F01N 3/28, F01N 3/20

(54) **EXHAUST AFTERTREATMENT DEVICE**

(71) Applicant: Donaldson Company, Inc., Bloomington, MN 55431 (US)
(72) Inventor: SRIDHARAN, Naveen, Minneapolis, MN55431 (US); PIETRZYK, Mariusz, Minneapolis, MN55431 (US); FOLLON, Bavo, Minneapolis, MN55431 (US); SILVA, Francisco, Minneapolis, MN55431 (US); GAONAC'H, Sandra, Minneapolis, MN55431 (US); STALENS, Sebastien, Minneapolis, MN55431 (US); GIRARD, Jean François, Minneapolis, MN55431 (US)
(74) Representative: Oryon NV

(57) **Abstract**

An exhaust aftertreatment device includes a mixing arrangement including a divider baffle arrangement and a restrictor arrangement. The divider baffle arrangement defines a first flow path that passes through turbulence generating members (e.g., louvers, perforations, etc.). The divider baffle also defines a second flow path that bypasses the turbulence generating members to mitigate back pressure. The first and second flow paths can be offset from center planes of the device to assist in generating turbulence. The turbulence generating members are on a dosing conduit directing reactant flow to the first aperture.

## Description

### BACKGROUND

Vehicles equipped with diesel engines typically include exhaust systems that have aftertreatment components such as selective catalytic reduction catalyst devices, lean NOx catalyst devices, or lean NOx trap devices to reduce the amount of undesirable gases, such as nitrogen oxides (NOx) in the exhaust. For these types of aftertreatment devices to work properly, a doser injects reactants, such as urea, ammonia, or hydrocarbons, into the exhaust gas. As the exhaust gas and reactants flow through the aftertreatment device, the exhaust gas and reactants convert the undesirable gases, such as NOx, into more acceptable gases, such as nitrogen and oxygen. However, the efficiency of the aftertreatment system depends upon how evenly the reactants are mixed with the exhaust gases. There is also a need for exhaust treatment devices that are compact and that provide efficient and effective mixing of reactants.

### SUMMARY

Aspects of the disclosure are directed to an exhaust aftertreatment device configured to mix reactant (e.g., urea) into an exhaust flow before the exhaust flow reaches an SCR (Selective Catalytic Reduction) substrate. In certain examples, the exhaust aftertreatment device includes a mixing arrangement including a divider baffle arrangement and a restrictor arrangement. The divider baffle arrangement defines a first flow path that passes through turbulence generating members (e.g., louvers, perforations, etc.) and a second flow path that bypasses the turbulence generating members. The second flow path mitigates back pressure created by the divider baffle while still allowing the first flow path to generate turbulence in the majority of the exhaust flow.

In certain implementations, the second flow path passes through a smaller aperture than the first flow path. In certain examples, the second flow path intersects a dosing conduit axis. In certain examples, the second flow path is radially offset from a longitudinal axis of the exhaust treatment device. In certain examples, the second flow path is laterally offset from a first center plane of the exhaust treatment device. In certain examples, the second flow path is offset from a first center plane of the exhaust treatment device and is offset from a second center plane of the exhaust treatment device that is orthogonal to the first center plane. In certain examples, the second flow path is aligned with a center line of the dosing conduit.

In certain implementations, the divider baffle includes a dosing conduit that carries the turbulence generating members. In certain examples, the dosing conduit includes openings in addition to the turbulence generating members. In some examples, the additional openings include slots. In other examples, the additional openings include perforations. In certain examples, the additional openings are disposed between the turbulence generating members and a doser mounting location.

In certain implementations, the divider baffle includes a perforated deflector plate. The perforated deflector plate includes a plurality of perforations allowing the exhaust flow to bypass both the first and second flow paths.

In certain implementations, the restrictor arrangement includes a deflection baffle defining a through passage. The deflection baffle carries a flow conditioner so that the flow conditioner moves with the deflection baffle as a unit. In certain examples, the flow condition is a flow straightener.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a perspective view of an example exhaust aftertreatment system configured in accordance with the principles of the present disclosure.
FIG. 2 is an axial cross-section of the exhaust aftertreatment system of FIG. 1.
FIG. 3 is a first perspective view of a first example mixer arrangement configured in accordance with the principles of the present disclosure.
FIGS. 4 and 5 are first and second perspective views of an example deflection baffle suitable for use with the first mixer arrangement of FIG. 3.
FIG. 6 is a second perspective view of the first mixer arrangement of FIG. 3.
FIG. 7 is an axial cross-sectional view of the first mixer arrangement of FIG. 3 installed within the aftertreatment system of FIG. 1, where the first and second flow paths are annotated.
FIG. 8 is a transverse cross-section of the first mixer arrangement and aftertreatment system of FIG. 7 taken just upstream of the first mixer arrangement.
FIG. 9 is an axial cross-sectional view of the mixer arrangement portion of the exhaust aftertreatment system of FIG. 1 including the first mixer arrangement of FIG. 3.
FIG. 10 is an axial cross-section of a first example restrictor arrangement suitable for use with the first example mixer arrangement of FIG. 3.
FIG. 11 is an exploded view of a second example restrictor arrangement suitable for use with the first example mixer arrangement of FIG. 3.
FIG. 12 is a perspective view of a second example dosing conduit installed at the mixer arrangement of FIG. 3.
FIG. 13 is a perspective view of a third example dosing conduit installed at the mixer arrangement of FIG. 3.
FIG. 14 is a perspective view of a fourth example dosing conduit installed at the mixer arrangement of FIG. 3.
FIG. 15 is a perspective view of a second example deflection plate installed at the mixer arrangement of FIG. 3.
FIG. 16 is a first perspective view of the second example deflection plate of FIG. 15.
FIG. 17 is a second perspective view of the second example deflection plate of FIG. 15.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

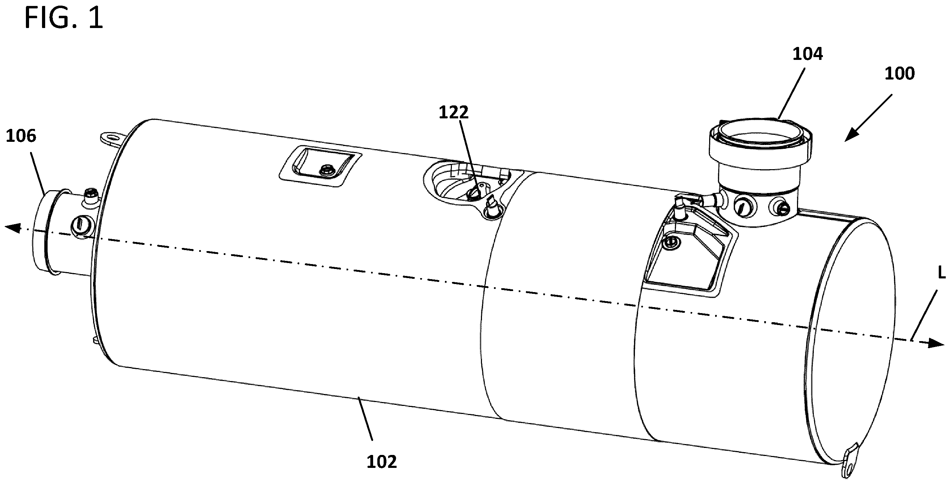

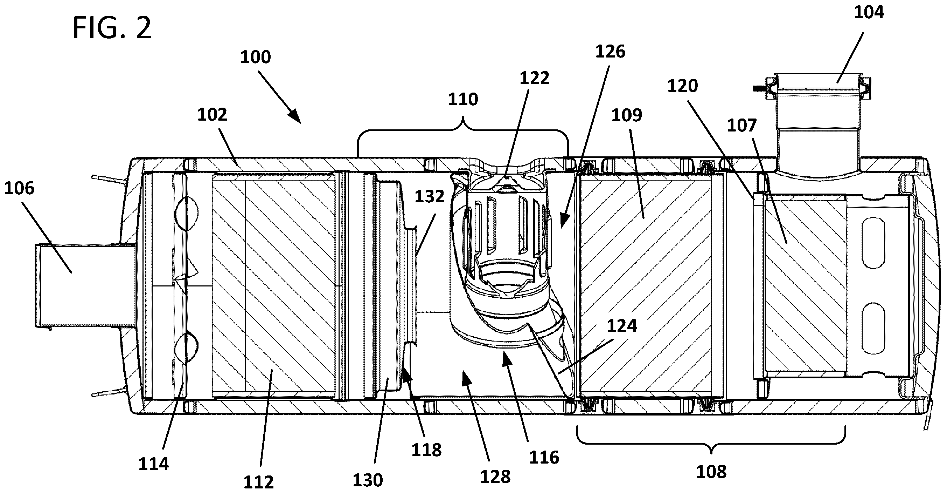

Referring to FIGS. 1 and 2, an exhaust aftertreatment system 100 includes a mixer arrangement 110 upstream of an SCR substrate 112. In certain implementations, the aftertreatment system 100 includes a body 102 in which at least the mixer arrangement 110 is disposed. In certain examples, the SCR substrate 112 also is disposed within the body 102. The body 102 has an inlet 104 and an outlet 106 spaced from each other along a longitudinal axis L of the body 102. In certain implementations, the aftertreatment system 100 also may include one or more particle filters 108 (e.g., diesel particulate filters) disposed upstream of the mixer arrangement 110. In certain examples, the particle filters 108, mixer arrangement 110, and SCR substrate 112 are aligned along the longitudinal axis L of the body 102.

In certain implementations, the inlet 104 extends at an angle to the longitudinal axis L of the body 102. In some examples, the inlet 104 may extend into the body 102 transverse to the longitudinal axis L. In other examples, the inlet 104 may enter the body 102 tangentially. In certain examples, a first particle filter 107 is disposed at the inlet 104. In certain examples, the first particle filter 107 extends across less than a full cross-sectional area of the body 102 and a first divider baffle 120 inhibits fluid flow from the inlet 104 from bypassing the first particle filter 107. In certain examples, the first divider baffle 120 and first particle filter 107 are disposed so that fluid entering from the inlet 104 swirls or otherwise flows around the first particle filter 107 before passing through the first particle filter 107. In certain implementations, a second particle filter 109 extends across the full cross-sectional area of the body 102 downstream of the first divider baffle 120.

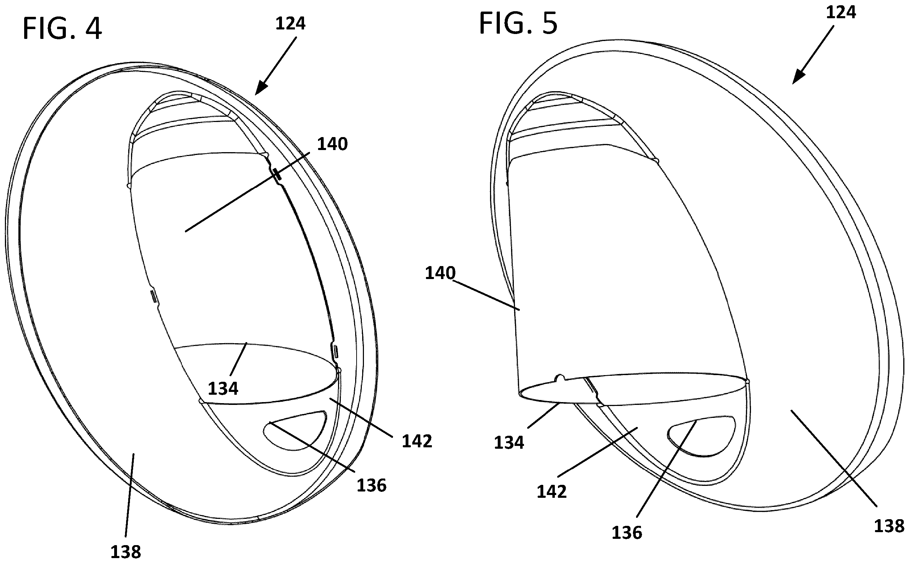

In certain implementations, the mixer arrangement 110 includes a turbulence generator arrangement 116 and a restrictor arrangement 118. The turbulence generator arrangement 116 includes a divider baffle 124 configured to be disposed within the body 102 to separate the body 102 into an upstream region 126 and a downstream region 128. The turbulence generator arrangement 116 creates two flow paths between the upstream and downstream regions 126, 128-a first flow path P1 through turbulence-inducing members 146 and a second flow path bypassing the turbulence-inducing members 146 (e.g., see FIG. 5). A doser mounting location 122 is disposed at the body 102 at the mixer arrangement 110. In certain examples, the doser mounting location 122 is disposed in the upstream region 126. In certain examples, the doser mounting location 122 is oriented so that a doser mounted thereat would dispense reactant into the first flow path P 1.

The restrictor arrangement 118 inhibits larger reactant (e.g., urea) particles from passing through to the SCR substrate 112. The restrictor arrangement 118 includes a baffle 130 that extends across the cross-sectional area of the body 102. The baffle 130 defines a passage 132 extending through the baffle 130. In certain examples, the passage 132 is disposed towards a center of the baffle 130. In certain examples, the passage 132 is disposed coaxial with the longitudinal axis L of the body 102. Centrifugal force created by the turbulent flow leaving the turbulence generator arrangement 116 will push the larger reactant particles radially outwardly from the restricted passage 132 while allowing the smaller reactant particles to pass through the passage 132. In certain implementations, the restrictor arrangement 118 also includes a flow conditioner 150 as will be discussed in more detail herein. In certain examples, the flow conditioner 150 balances the distribution of reactant over the cross-sectional area of the body 102 before the reactant-laden flow reaches the SCR substrate 112.

In certain implementations, a second turbulence generator 114 is disposed downstream of the SCR substrate 112. For example, the second turbulence generator 114 may include a swirl baffle (e.g., a baffle with scoop shaped louvers). In some implementations, the outlet 106 is angled relative to the inlet 104. For example, the outlet 106 may be orthogonally directed relative to the inlet 104. In the example shown, the outlet 106 is coaxial with the longitudinal axis L of the body 102.

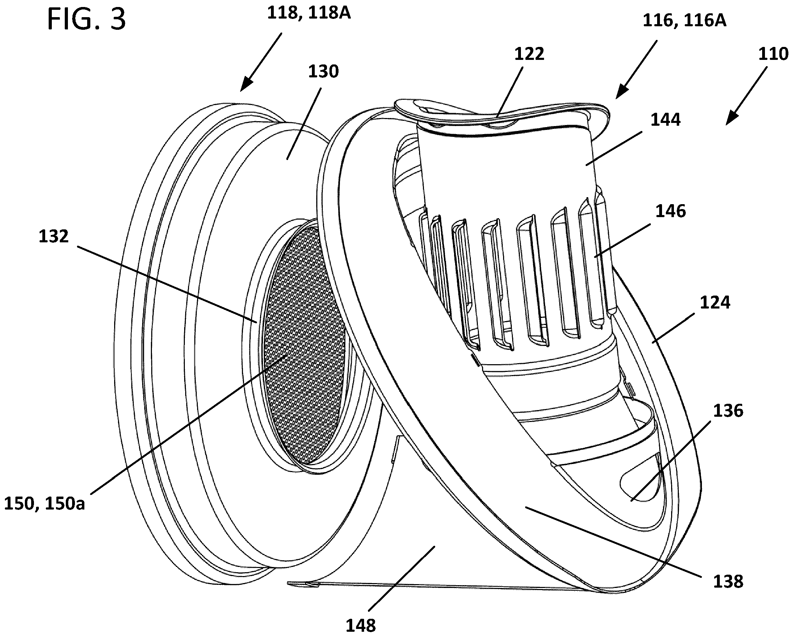

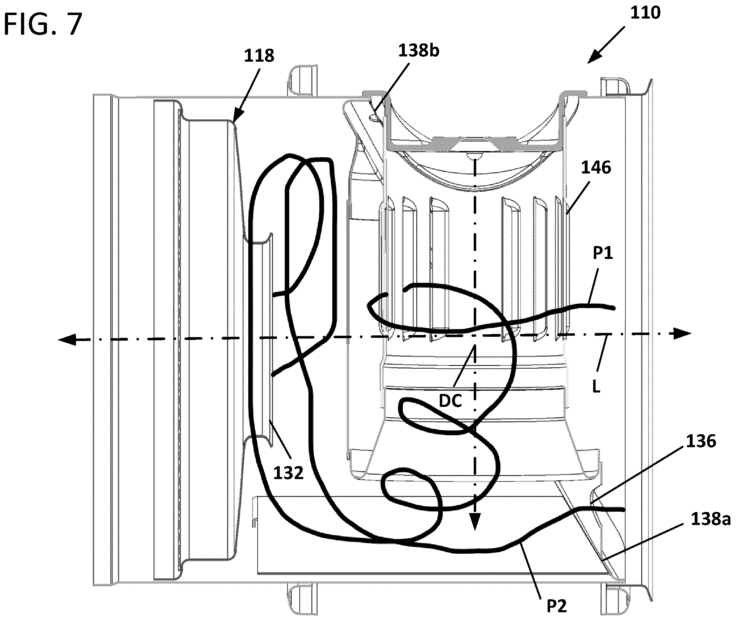

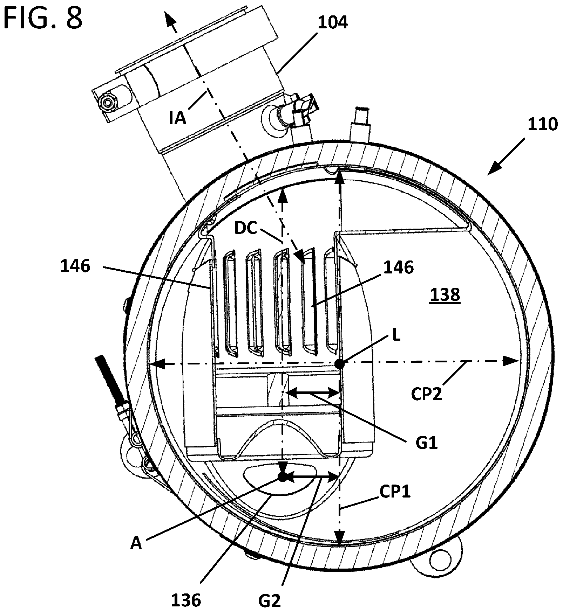

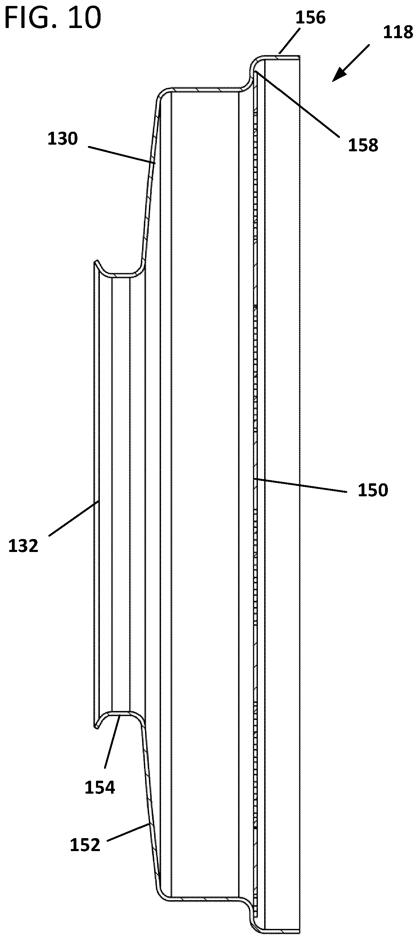

FIGS. 3-10 illustrate a first example implementation 110 of a mixer arrangement 110 suitable for use with the aftertreatment system 100 of FIGS. 1 and 2. The turbulence generator arrangement 116 of the first example mixer 110 includes a divider baffle 124 defining a first aperture 134 and a second aperture 136. The first flow path P1 passes through the first aperture 134 and the second flow path P2 passes through the second aperture 136. The divider baffle 124 includes a deflection plate 138 that extends across the transverse cross-sectional area of the body 102 (e.g., see FIG. 8). In certain examples, the deflection plate 138 is generally planar. In certain examples, the deflection plate 138 is disposed at an angle relative to the transverse-cross-sectional area of the body 102 so that incoming flow hits one end 138a of the baffle (e.g., the bottom end shown in FIG. 7) before hitting the opposite end 138b (e.g., the top end shown in FIG. 7.).

The divider baffle 124 defines a first contoured section 140 protruding downstream of the deflection plate 138 and a second contoured section 142 protruding upstream of the deflection plate 138. The first and second contoured sections 140, 142 cooperate to define the first aperture 134. A dosing conduit 144 is disposed within the upstream region 126 and extends between the doser mounting location 122 and the first aperture 134. The dosing conduit 144 guides the dispensed reactant towards the first aperture 134. The dosing conduit 144 also directs the flow to swirl or otherwise move in a turbulent manner while passing through the first aperture 134. For example, the dosing conduit 144 may define a plurality of openings 146 through which fluid flow can enter the dosing conduit 144. The first contoured section 140 helps a portion of the flow to curve around the dosing conduit 144 before entering through the openings 146. In certain examples, the openings 146 include turbulence generating members (e.g., louvers) that may induce swirl or other turbulent movement as the flow passes through the openings. In certain examples, the openings are themselves turbulence generating members in their arrangement.

The second contoured section 142 defines the second aperture 136. The second aperture 136 allows another portion of the flow to pass along the second flow path P2, bypassing the dosing conduit 144. In certain examples, the flow passing along the second flow path P2 is generally less turbulent than the flow passing along the first flow path P1. In certain examples, more turbulence is generated when the second flow path P2 intersects with the first flow path P1. In certain examples, the second aperture 136 is smaller than the first aperture 134. In certain examples, the second aperture 136 is less than half the size of the first aperture 134.

In certain implementations, the first aperture 134 and/or the second aperture 136 are disposed offset from the longitudinal axis L of the body 102. For example, the dosing conduit 144 defines a dosing axis DC that extends from the doser mounting location 122 to the first aperture 134. The dosing axis DC extends at an angle to the longitudinal axis L. In certain examples, the dosing axis DC extends orthogonal to the longitudinal axis L (e.g., see FIG. 7). In certain implementations, the dosing axis DC is angled relative to an inlet axis IA (e.g., see FIG. 8). In certain examples, the dosing axis DC of the dosing conduit 144 is angled between 1 degree and 180 degrees relative to the inlet axis IA. In certain examples the dosing axis DC of the dosing conduit 144 is angled between 90 degrees and 180 degrees relative to the inlet axis IA.

A first and second center planes CP1, CP2, respectively, extend along the longitudinal axis L of the body 102 while oriented orthogonal to each other. In certain implementations, the dosing axis DC is offset from the first center plane CP1 in a first direction a gap G1 (e.g., see FIG. 8). Accordingly, at least a majority of the first aperture 134 is offset relative to the first central plane CP1, which creates a swirling effect in flow passing through the first aperture 134 to the downstream region 128.

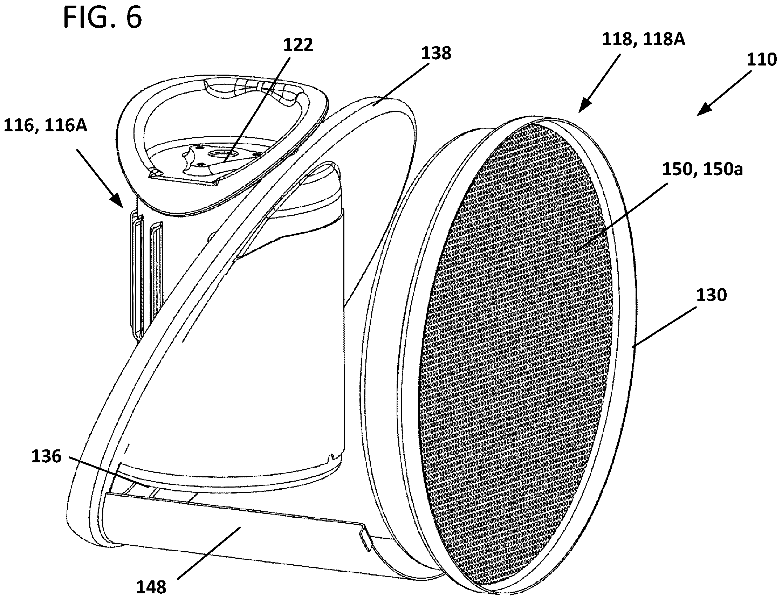

In certain implementations, an axis A of the second aperture 136 extends at an angle relative to the dosing axis DC. For example, the axis A may extend orthogonal to the dosing axis DC. In an example, the axis A may extend parallel to the longitudinal axis L. In certain examples, the axis A may be offset from the first center plane CP1 in the first direction by a gap G2. In an example, the gap G2 may be the same as the gap G1. In certain examples, the second aperture 136 is disposed so that the dosing axis DC intersects the axis A of the second aperture 136 (e.g., see FIGS. 6 and 7). In certain examples, the first and second apertures 134, 136 are disposed in a common quadrant of the body 102 defined by the first and second center planes CP1, CP2.

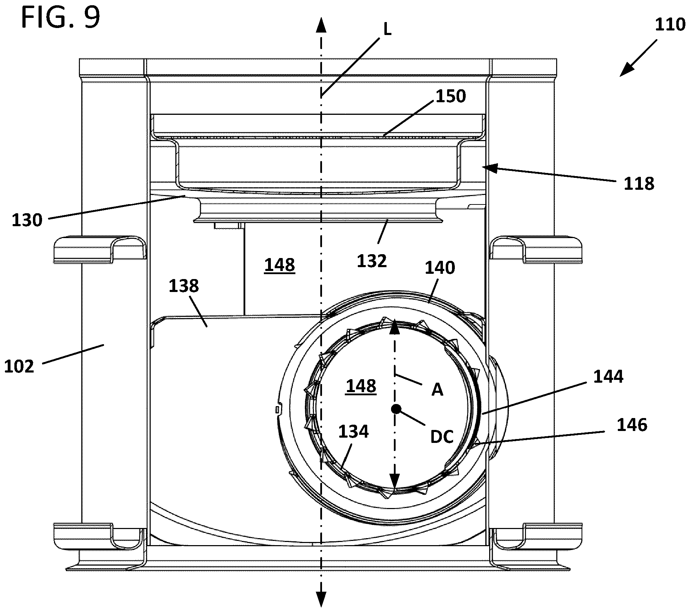

In certain implementations, a deflector 148 extends downstream from the deflection plate 138 of the divider baffle 124. In certain examples, the deflector 148 extends across the first aperture 134 so that flow passing through the first aperture 134 encounters the deflector 148 instead of a sidewall of the body 102 (e.g., see FIGS. 7 and 9). In certain examples, the deflector 148 extends across a full area of the first aperture (e.g., see FIG. 9). In certain examples, the deflector 148 extends downstream of the dosing conduit 144 (e.g., see FIG. 7). In certain examples, the deflector 148 is curved about a longitudinal axis L of the body 102 (e.g., see FIG. 3. In certain examples, the deflector 148 is radially offset from the sidewall of the body 102 (e.g., see FIG. 7).

In certain implementations, the baffle 130 of the restrictor arrangement 118 is configured to hold the flow conditioner 150 so that the baffle 130 and flow straightener 150 can be handled as a unit. For example, the baffle 130 may include a deflection surface 152 facing generally towards the divider baffle 124 and a mounting section 156 configured to seat against the inner sidewall of the body 102. In certain examples, the flow conditioner 150 is configured to mount within the mounting section 156. In certain examples, the baffle 130 steps outwardly as the baffle 130 extends away from the divider baffle 124. The shoulder 158 formed at the step inhibits axial movement of the flow conditioner 150 towards the divider baffle 124. In certain examples, a lip 154 protruding from the deflection surface 152 towards the divider baffle 124 to define the passage 132. In certain examples, the lip 154 defines a funnel or trumpet shaped passage 132.

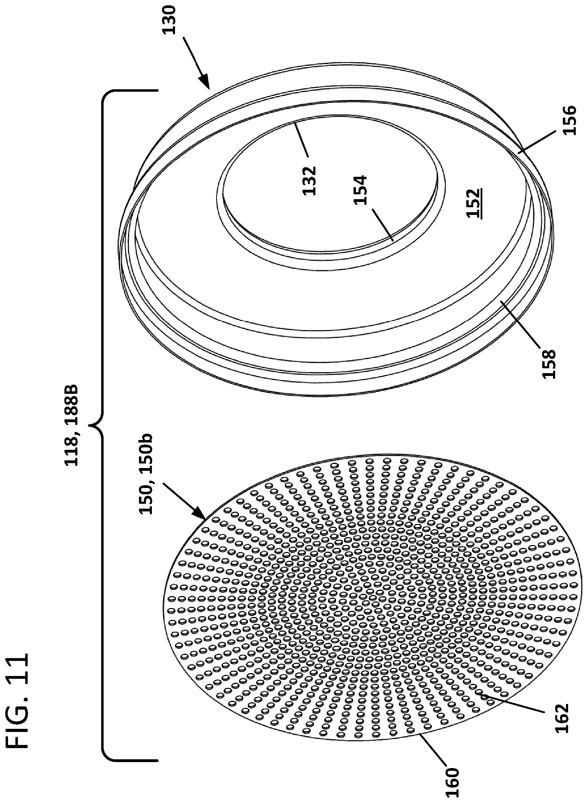

In certain implementations, the flow conditioner 150 includes a flow straightener defining a plurality of holes 162 through a plate 160 or other baffle structure. In certain examples, the holes 162 are disposed across a majority of the surface area of the plate 160. In certain examples, the holes 162 are generally evenly dispersed over the surface area of the plate 160. FIG. 6 shows a first example implementation of a flow straightener 150a having holes 162 that follow a grid pattern. FIG. 11 shows a second example implementation of a flow straightener 150b having holes 162 arranged in a radial pattern. Other configurations are possible.

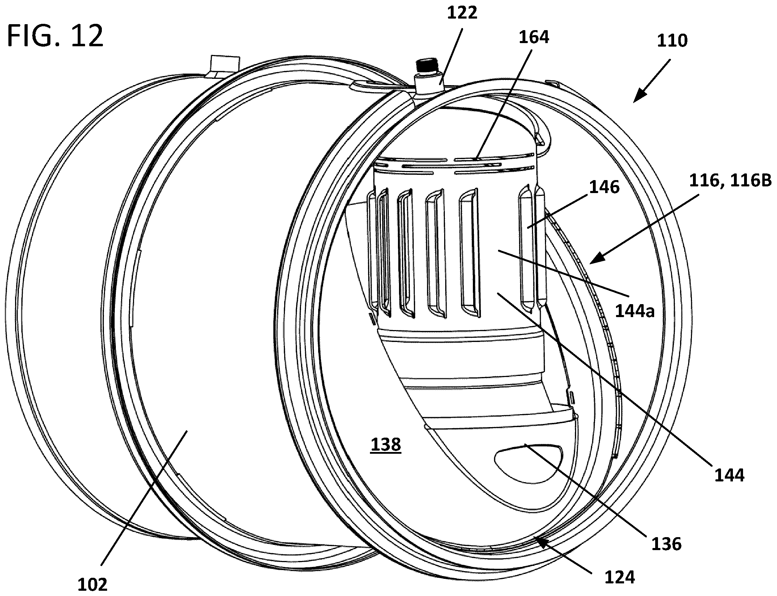

FIGS. 12-17 illustrate alternative turbulence generator arrangements 116B-116E suitable for use with the aftertreatment system 100 instead of turbulence generator arrangement 116A. The turbulence generator arrangements 116B-116E function substantially the same as turbulence generator arrangement 116A except where otherwise indicated. Each of the turbulence generator arrangements 116B-116E can be used with any of the restrictor arrangements 118, 118A, 118B disclosed herein. As shown in FIGS. 12-14, the dosing conduit 144 of the turbulence generator arrangement 116B-116D may include openings 164, 166, 168, respectively, in addition to louvered openings 146. In certain examples, the additional openings 164, 166, 168 help to protect the spray cone of the reactant. For example, the additional openings 164, 166, 168 may be disposed between the louvered openings 146 and the doser mounting location 122.

In FIG. 12, the additional openings 164 of the third example include slots elongated along a circumference of the dosing conduit 144. In certain examples, the slots 164 are offset from each other. In certain examples, the slots 164 overlap each other along the dosing axis DC. In certain examples, the slots 164 are sufficiently long to extend across multiple ones of the louvered openings 146. In an example, the dosing conduit 144 defines a solid (e.g., non-louvered) surface 144a circumferentially disposed between two louvered openings 146. In certain examples, the solid surface 144a extends further along the circumference than a circumferential spacing between louvered openings 146. In certain examples, the louvered openings 146 disposed at one side of the solid surface 144a face in a first direction and the louvered openings 146 disposed at the opposite side of the solid surface 144a face in a different, second direction. In an example, each additional opening 164 is sufficiently elongated to span the solid surface 144a in the circumferential direction. In certain examples, the additional openings 164 include three rows of slots.

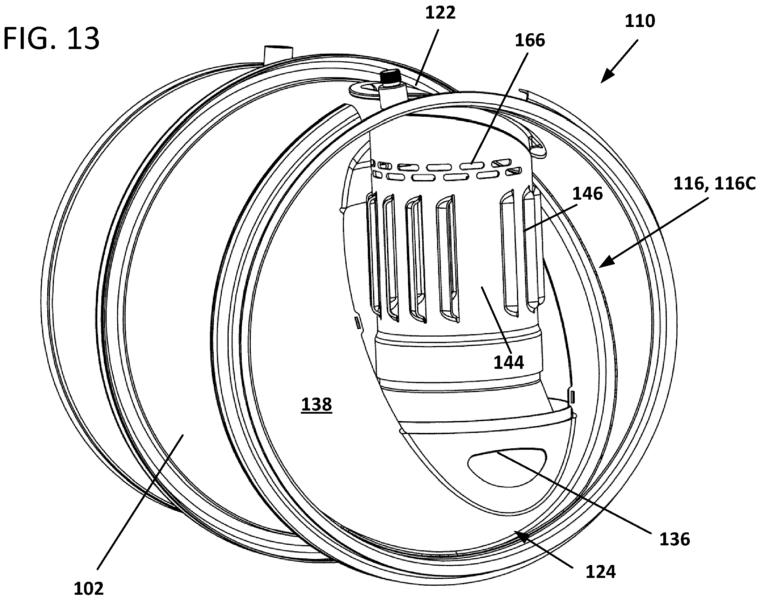

In FIG. 13, the additional openings 166 also include elongated slots disposed along the circumference of the dosing conduit 144. However, the slots 166 are shorter than the slots 164 of FIG. 12. For example, each slot 166 is shorter than a circumferential width of the solid surface 144a between louvered openings 146. In certain examples, the louvered openings face in different directions on the opposite sides of the solid surface 144a. In certain examples, the additional openings 164 include two rows of slots.

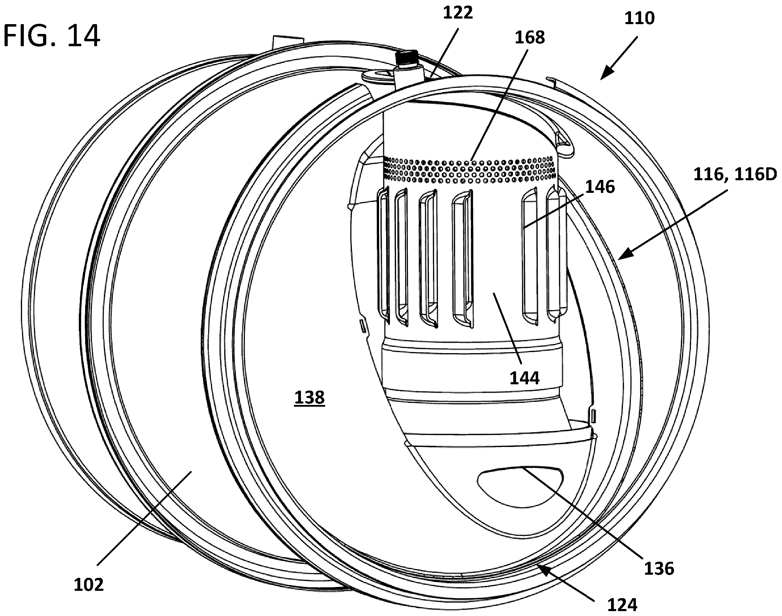

In FIG. 14, the additional openings 168 include perforations (e.g., round perforations) disposed along the circumference of the dosing conduit 144. In certain examples, the additional openings 168 include four rows of perforations. In certain examples, the perforations 168 of adjacent rows are offset from each other. In certain implementations, the dosing conduit 144 defines the solid surface 144a between adjacent louvered openings 146. In certain examples, the louvered openings 146 face in different directions on the opposite sides of the solid surface 144a.

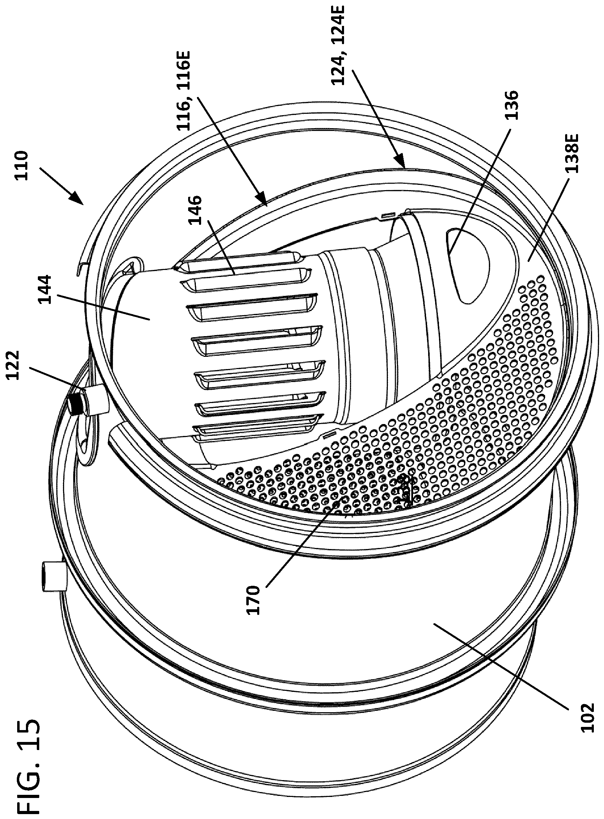

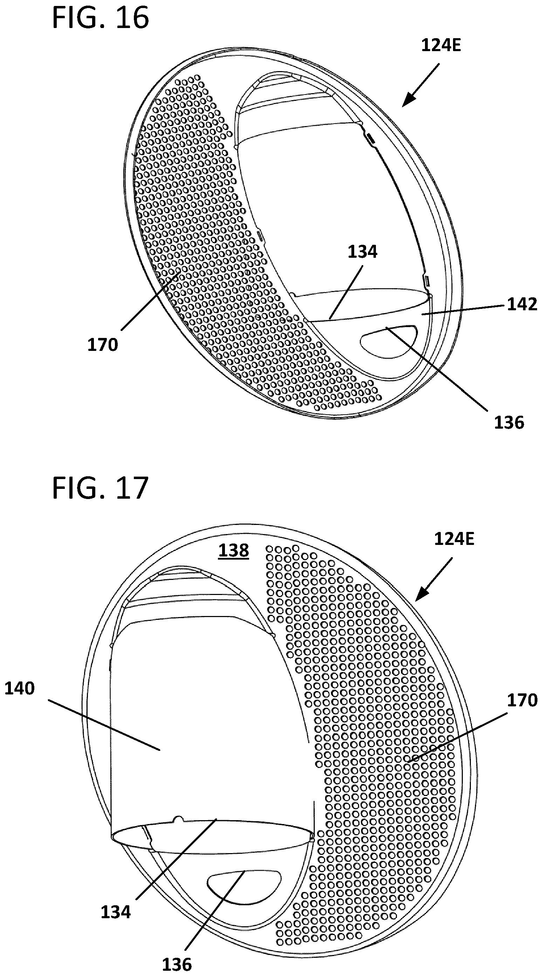

FIGS. 15 and 16 illustrate a fifth example implementation 116E of the turbulence generator arrangement 116 including a second example divider baffle 124E. In certain examples, the second example divider baffle 124E includes a perforated deflection plate 138E that provides a plurality of third flow paths between the upstream and downstream regions 126, 128. The third flow paths are separate from the first flow path P1 and the second flow path P2. Each of the third flow paths extends through a respective perforation 170 defined in the deflection plate 138E. The inclusion of the third flow paths decreases the back pressure at the divider baffle 124E.

In some examples, the dosing conduit 144 is disposed at a first side of the deflection plate 138E while the perforations 170 are grouped at an opposite second side of the deflection plate 138E (e.g., see FIGS. 16 and 17). In certain examples, the perforations 170 are defined over a majority of an exposed surface area of the deflection plate 138E. In some examples, the perforations 170 are disposed in a plurality of rows. In other examples, the perforations 170 are disposed in a plurality of columns. Other patterns are possible. In certain examples, each perforation 170 is smaller than the second aperture 136.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

What could be claimed is the following:
1. An exhaust aftertreatment system comprising:
   a body having a longitudinal axis;
   a divider baffle configured to be disposed within the body to separate the body into an upstream section and a downstream section, the divider baffle defining a first aperture extending along a first axis between the upstream and downstream sections, the divider baffle also defining a second aperture extending along a second axis between the upstream and downstream sections, the first axis extending orthogonal to the longitudinal axis of the body and the second axis extending parallel with the longitudinal axis of the body, and the second axis being radially offset from the longitudinal axis of the body;
   a dosing conduit disposed in the upstream section of the body, the dosing conduit extending outwardly from the first aperture of the divider baffle towards a doser mounting location;
   a restrictor baffle disposed in the downstream section of the body, the restrictor baffle being separately mounted into the body from the divider baffle, the restrictor baffle defining a restricted passage extending parallel to the longitudinal axis of the body; and
   a flow conditioner carried in the restrictor baffle.
2. The exhaust aftertreatment system of item 1, wherein the flow conditioner includes a flow straightener.
3. The exhaust aftertreatment system of item 2, wherein the flow straightener includes perforations arranged in a grid pattern.
4. The exhaust aftertreatment system of item 2 or 3, wherein the flow straightener includes perforations arranged in a radial pattern.
5. The exhaust aftertreatment system according to any of the previous items, wherein the divider baffle is solid other than the first and second apertures.
6. The exhaust aftertreatment system according to any of items 1 to 4, wherein the divider baffle is perforated other than the first and second apertures.
7. An exhaust aftertreatment system comprising:
   a body having a longitudinal axis and defining a doser mounting location; and
   a turbulence generator arrangement configured to be disposed within the body to separate the body into an upstream section and a downstream section, the turbulence generator arrangement including divider baffle and a dosing conduit, the divider baffle defining a first aperture connecting the upstream and downstream sections, the dosing conduit extending between the first aperture and the doser mounting location, the dosing conduit including a plurality of turbulence generating members upstream of the first aperture, and the divider baffle including a second aperture connecting the upstream and downstream sections while bypassing the turbulence generating members, the first and second apertures both being offset towards a common side of a center plane of the body.
8. The exhaust aftertreatment system of item 7, wherein the first and second aperture are disposed in a common quadrant of the body.
9. The exhaust aftertreatment system of item 7 or 8, wherein the dosing conduit includes a plurality of additional openings disposed between the turbulence generating members and the doser mounting location.
10. The exhaust aftertreatment system of item 9, wherein the additional openings include elongated slots.
11. The exhaust aftertreatment system of item 9 or 10, wherein the additional openings include perforations.
12. The exhaust aftertreatment system according to any of items 7 to 11, wherein a dosing conduit axis extend at a non-zero angle relative to an insertion axis of an inlet to the body.
13. The exhaust aftertreatment system of item 12, wherein the inlet axis is orthogonal to the longitudinal axis of the body.
14. The exhaust aftertreatment system according to any of items 7 to 13, further comprising a restrictor baffle disposed in the downstream section of the body, the restrictor baffle defining a restricted passage.
15. The exhaust aftertreatment system of item 14, wherein the restrictor baffle is separately mounted into the body from the divider baffle.
16. The exhaust aftertreatment system of item 14 or 15, further comprising a flow conditioner carried in the restrictor baffle.
17. An exhaust aftertreatment system comprising:
   a body having a longitudinal axis and defining a doser mounting location; and
   a turbulence generator arrangement configured to be disposed within the body to separate the body into an upstream section and a downstream section, the turbulence generator arrangement including divider baffle and a dosing conduit,
   the divider baffle defining a first aperture, a second aperture, and a plurality of third apertures extending therethrough, the first aperture being larger than the second aperture, and the second aperture being larger than the third apertures, the turbulence generator arrangement also including a dosing conduit extending outwardly from the first aperture into the upstream section.
18. The exhaust aftertreatment system of item 17, wherein the dosing conduit is disposed at a first side of the divider baffle and wherein at least a majority of the third apertures is disposed at an opposite second side of the divider baffle.
19. The exhaust aftertreatment system of item 17 or 18, wherein the third apertures cover a majority of a surface area of the second side of the divider baffle.
20. The exhaust aftertreatment system according to any of items 17 to 19, further comprising a restrictor arrangement including a restrictor baffle carrying a flow conditioner.

## Claims

1. An exhaust aftertreatment system comprising:
a body having a longitudinal axis;
a divider baffle configured to be disposed within the body to separate the body into an upstream section and a downstream section, the divider baffle defining a first aperture extending along a first axis between the upstream and downstream sections, the divider baffle also defining a second aperture extending along a second axis between the upstream and downstream sections, the first axis extending orthogonal to the longitudinal axis of the body and the second axis extending parallel with the longitudinal axis of the body, and the second axis being radially offset from the longitudinal axis of the body;
a dosing conduit disposed in the upstream section of the body, the dosing conduit extending outwardly from the first aperture of the divider baffle towards a doser mounting location;
a restrictor baffle disposed in the downstream section of the body, the restrictor baffle being separately mounted into the body from the divider baffle, the restrictor baffle defining a restricted passage extending parallel to the longitudinal axis of the body; and
a flow conditioner carried in the restrictor baffle.

2. The exhaust aftertreatment system of claim 1, wherein the flow conditioner includes a flow straightener.

3. The exhaust aftertreatment system of claim 2, wherein the flow straightener includes perforations arranged in a grid pattern.

4. The exhaust aftertreatment system of claim 2 or 3, wherein the flow straightener includes perforations arranged in a radial pattern.

5. The exhaust aftertreatment system according to any of the previous claims, wherein the divider baffle is solid other than the first and second apertures.

6. The exhaust aftertreatment system according to any of claims 1 to 4, wherein the divider baffle is perforated other than the first and second apertures.

7. An exhaust aftertreatment system according to any of the previous claims, wherein the dosing conduit includes a plurality of turbulence generating members upstream of the first aperture, and wherein the first and second apertures are both offset towards a common side of a center plane of the body.

8. The exhaust aftertreatment system according to any of the previous claims, wherein the first and second aperture are disposed in a common quadrant of the body.

9. The exhaust aftertreatment system of claim 7 or 8, wherein the dosing conduit includes a plurality of additional openings disposed between the turbulence generating members and the doser mounting location.

10. The exhaust aftertreatment system of claim 9, wherein the additional openings include elongated slots or perforations.

11. The exhaust aftertreatment system according to any of claims 7 to 10, wherein a dosing conduit axis extend at a non-zero angle relative to an insertion axis of an inlet to the body.

12. The exhaust aftertreatment system of claim 11, wherein the inlet axis is orthogonal to the longitudinal axis of the body.

13. An exhaust aftertreatment system according to any of the previous claims, wherein the divider baffle further defines a plurality of third apertures extending therethrough, the first aperture being larger than the second aperture, and the second aperture being larger than the third apertures.

14. The exhaust aftertreatment system of claim 13, wherein the dosing conduit is disposed at a first side of the divider baffle and wherein at least a majority of the third apertures is disposed at an opposite second side of the divider baffle.

15. The exhaust aftertreatment system of claim 13 or 14, wherein the third apertures cover a majority of a surface area of the second side of the divider baffle.
